(19) Europäisches Patentamt / European Patent Office / Office européen des brevets

(11) **EP 3 539 203 B1**

(12) **FASCICULE DE BREVET EUROPEEN**

(45) Date de publication et mention de la délivrance du brevet:
**08.07.2020 Bulletin 2020/28**

(21) Numéro de dépôt: **17797674.3**

(22) Date de dépôt: **12.10.2017**

(51) Int Cl.:
*H02M 1/42* (2007.01)   *H02M 7/219* (2006.01)
*H02M 7/487* (2007.01)   *H02M 1/00* (2006.01)
*H02M 3/335* (2006.01)

(86) Numéro de dépôt international:
**PCT/FR2017/052807**

(87) Numéro de publication internationale:
**WO 2018/087442 (17.05.2018 Gazette 2018/20)**

(54) **PROCÉDÉ DE COMMANDE D'UN REDRESSEUR TRIPHASÉ POUR UN DISPOSITIF DE CHARGE EMBARQUÉ SUR UN VÉHICULE ÉLECTRIQUE OU HYBRIDE**

VERFAHREN ZUR STEUERUNG EINES DREIPHASIGEN WECHSELRICHTERS FÜR EINE LADEVORRICHTUNG AN BORD EINES ELEKTRO- ODER HYBRIDFAHRZEUGS

METHOD FOR CONTROLLING A THREE-PHASE RECTIFIER FOR A CHARGING DEVICE ON BOARD AN ELECTRICAL OR HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.11.2016 FR 1660788**

(43) Date de publication de la demande:
**18.09.2019 Bulletin 2019/38**

(73) Titulaires:
• **Renault S.A.S.**
  **92100 Boulogne-Billancourt (FR)**
• **Nissan Motor Co., Ltd.**
  **Kanagawa 221-0023 (JP)**

(72) Inventeurs:
• **KVIESKA, Pedro**
  **78000 Versailles (FR)**
• **MALOUM, Abdelmalek**
  **94550 Chevilly-Larue (FR)**
• **MERIENNE, Ludovic**
  **91190 Gif sur Yvette (FR)**

(74) Mandataire: **Rougemont, Bernard**
  **Renault s.a.s**
  **TCR GRA 2 36 - Sce 00267**
  **1, Avenue du Golf**
  **78084 Guyancourt Cedex (FR)**

(56) Documents cités:

GB-A- 2 294 165

• HERMINJARD J ED - EPE ASSOCIATION: "THREE-PHASE UNITE POWER FACTOR AC/DC CONVERTER (PFC) WITH DUAL ISOLATED DC/DC CONVERTER FOR A BATTERY CHARGER", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, vol. 8, 7 septembre 1999 (1999-09-07), pages 1-10, XP000878497, ISBN: 978-90-75815-04-7
• THIAGO B. SOEIRO ET AL: "Hybrid Active Third-Harmonic Current Injection Mains Interface Concept for DC Distribution Systems", IEEE TRANSACTIONS ON POWER ELECTRONICS, vol. 28, no. 1, 1 janvier 2013 (2013-01-01), pages 7-13, XP055149330, ISSN: 0885-8993, DOI: 10.1109/TPEL.2012.2209897
• IDE P ET AL: "Investigation of low cost control schemes for a selected 3-level switched mode rectifier", TELECOMMUNICATIONS ENERGY CONFERENCE, 1997. INTELEC 97., 19TH INTERNAT IONAL MELBOURNE, VIC., AUSTRALIA 19-23 OCT. 1997, NEW YORK, NY, USA,IEEE, US, 19 octobre 1997 (1997-10-19), pages 413-418, XP010261385, DOI: 10.1109/INTLEC.1997.645920 ISBN: 978-0-7803-3996-5

**Description**

La présente invention concerne un procédé de commande d'un redresseur triphasé pour un dispositif de charge à entrée triphasée, comprenant un convertisseur AC-DC (courant alternatif-courant continu) isolé. Un tel dispositif de charge est particulièrement adapté pour une utilisation en tant que dispositif embarqué dans un véhicule automobile électrique ou hybride.

Ces véhicules sont équipés de batteries électriques haute tension et comprennent généralement des chargeurs embarqués, c'est-à-dire des dispositifs de charge des batteries électriques qui sont montés directement sur les véhicules. La fonction principale de ces dispositifs de charge est la recharge des batteries à partir de l'électricité disponible sur le réseau de distribution électrique. Ils assurent donc une conversion d'un courant alternatif en courant continu. Les critères recherchés pour les dispositifs de charge, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

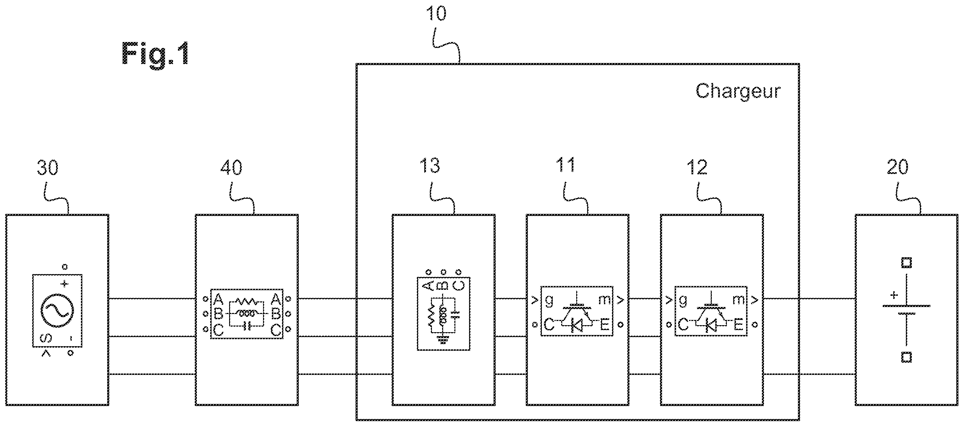

On se place ici dans la catégorie des dispositifs de charge à entrée triphasée, qui présentent une puissance de charge supérieure relativement aux dispositifs de charge à entrée monophasée. La figure 1 illustre une topologie connue d'un dispositif de charge 10 isolé, embarqué sur un véhicule électrique ou hybride pour la recharge de la batterie haute tension 20 du véhicule à partir du réseau électrique triphasé 30 auquel le dispositif de charge embarqué 10 est connecté par l'intermédiaire de l'impédance de ligne 40 du réseau.

Afin de mettre en œuvre la fonction de conversion AC-DC avec isolation galvanique, il est connu d'utiliser un dispositif de charge 10 comprenant un premier convertisseur AC-DC, qui comporte un circuit correcteur de facteur de puissance 11 (PFC, pour « Power factor Correction ») afin de limiter les harmoniques de courant d'entrée, et un deuxième convertisseur DC-DC (courant continu-courant continu) 12, pour assurer la régulation de la charge et également pour assurer la fonction d'isolation pour la sécurité d'utilisation. Un filtre d'entrée 13 est classiquement intégré en entrée du dispositif de charge embarqué 10, en amont du circuit PFC 11 par rapport au réseau électrique triphasé 30.

Le circuit PFC 11 est géré par un contrôleur intégré (non représenté), qui analyse et corrige en temps réel l'allure du courant par rapport à la tension. Il en déduit les erreurs de forme par comparaison avec la sinusoïde redressée de la tension et il les corrige en contrôlant la quantité d'énergie grâce à un découpage haute fréquence et un stockage d'énergie dans une inductance. Son rôle est plus précisément d'obtenir un courant non déphasé et le plus sinusoïdal possible en entrée de l'alimentation du chargeur.

Pour le circuit PFC, il est possible de mettre en œuvre un redresseur triphasé trois niveaux à trois interrupteurs, communément connu sous le nom de redresseur triphasé de Vienne. Le choix de cette topologie est en effet particulièrement avantageux du point de vue des performances pour la correction de facteur de puissance.

**L'état de l'art**

Document 1: HERMINJARD J ED - EPE ASSOCIATION: "THREE-PHASE UNITE POWER FACTOR AC/DC CONVERTER (PFC) WITH DUAL ISOLATED DC/DC CONVERTER FOR A BATTERY CHARGER",8TH EUROPEAN CONFERENCE ON POWER ELECTRONICS AND APPLICATIONS. LAUSANNE, CH, SEPT. 7 - 9, 1999; [EPE. EUROPEAN CONFERENCE ON POWER ELECTRONICS AND APPLICATIONS], EPE ASSOCIATION, BRUSSELS, BE, vol. 8, 7 septembre 1999 (1999-09-07), pages 1-10, ISBN: 978-90-75815-04-7 Document de brevet 1: CN 104811061

Le document de brevet CN 104811061 décrit à la figure 1 une modélisation d'un tel redresseur PFC triphasé où chaque phase de la tension d'entrée alternative triphasée est reliée par des inductances respectives L1, L2, L3 à un bras de commutation du redresseur pourvu d'une cellule d'interrupteurs de puissance, respectivement S1, S2, S3, les cellules d'interrupteurs de puissance étant disposées chacune entre une inductance respective et un point milieu M entre les deux tensions de sortie du redresseur, correspondant respectivement à la tension sur un premier condensateur de sortie C1 connecté entre le point milieu et une ligne d'alimentation positive et à la tension sur un deuxième condensateur de sortie C2 connecté entre le point milieu et une ligne d'alimentation négative.

Généralement pour commander un tel redresseur, on mesure les tensions et les courants en entrée de chaque interrupteur ainsi qu'en sortie du redresseur et on utilise des boucles de régulation permettant de générer des rapports cycliques nécessaires pour régler le temps de conduction moyen des interrupteurs.

L'état de l'art sur l'application des rapports cycliques sur chaque bras de commutation d'un redresseur triphasé de Vienne consiste à utiliser l'un ou l'autre des deux interrupteurs en fonction du sens de circulation du courant sur le bras. Cependant, lorsque le courant d'entrée est proche de zéro, des erreurs de mesure peuvent conduire à ce qu'on ne pilote pas le bon interrupteur. En outre, l'application de ces rapports cyclique selon l'état de l'art conduit à des pertes par commutation importantes.

Un but de l'invention est de pallier cette limitation. En particulier, il existe un besoin pour une stratégie améliorée d'application des rapports cycliques sur les bras de commutation du redresseur triphasé de Vienne de manière à respecter des tensions cibles voulues par la régulation tout en réduisant les pertes par commutation.

Conformément à l'invention, ce but est atteint par un procédé de commande d'un circuit correcteur de facteur de puissance pour un dispositif de charge de batterie embarqué dans un véhicule automobile électrique ou hybride, ledit dispositif de charge étant apte à être connecté à un réseau d'alimentation électrique triphasé afin de charger la batterie et comportant un convertisseur AC-DC isolé comprenant ledit circuit correcteur de facteur de puissance et un convertisseur DC-DC, ledit circuit correcteur de facteur de puissance étant un redresseur triphasé de Vienne comprenant trois bras de commutation aptes à être connectés chacun à l'une des phases respectives du réseau d'alimentation triphasé par l'intermédiaire d'une bobine d'inductance en série et comprenant chacun un montage en série d'un interrupteur haut apte à être piloté quand le courant du réseau est positif et d'un interrupteur bas apte à être piloté quand le courant du réseau est négatif, chaque bras étant piloté à l'aide de signaux de commande de modulation par largeur d'impulsion dont le rapport cyclique de commutation est déterminé en fonction de valeurs de courants de consigne en entrée du redresseur, caractérisé en ce que, sur chaque période des courants de consigne, les signaux de commande sont déterminés de façon à ne faire commuter systématiquement que deux bras sur trois en fonction d'un changement de signe des courants de consigne et, parmi les deux bras qui commutent, on procède à une répartition de l'état de commutation des interrupteurs concernés en faisant varier les rapports cycliques en fonction des valeurs des tensions entre phases à chaque instant donné.

Avantageusement, on divise la période des courants de consigne en des portions de périodes, on analyse l'évolution des courants de consigne dans les portions de période, de façon à identifier sur chaque portion de période successivement, le bras de commutation dont la tension est intermédiaire entre une tension de phase la plus haute et une tension de phase la plus faible, et on applique sur le bras identifié un signal de commande ayant un rapport cyclique fixé à 100% lors du changement de signe de la tension intermédiaire, de sorte que les interrupteurs du bras identifié sont maintenus fermés en permanence autour du changement de signe de la tension intermédiaire.

Avantageusement, pour chaque portion de période des courants de consigne :

- on commande la fermeture des interrupteurs haut et bas de la tension intermédiaire tant que le rapport cyclique appliqué sur le bras identifié est fixé à 100%,
- pour un courant de consigne sur un des deux bras qui commute positif, on commande le hachage de l'interrupteur haut du bras correspondant avec un premier rapport cyclique et on ouvre l'interrupteur bas du bras correspondant, et
- pour un courant de consigne sur un des deux bras qui commute négatif, on commande le hachage de l'interrupteur bas avec un deuxième rapport cyclique et on ouvre l'interrupteur haut.

Ainsi, à chaque instant de la période des courants de consigne on ne fait commuter que deux interrupteurs parmi l'ensemble des interrupteurs des trois bras de commutation pour le hachage des courants.

De préférence, chaque portion de période constitue un sixième d'une période complète des courants de consigne.

L'invention concerne également un dispositif de commande d'un circuit correcteur de facteur de puissance pour un dispositif de charge de batterie embarqué dans un véhicule automobile électrique ou hybride, ledit dispositif de charge étant apte à être connecté à un réseau d'alimentation électrique triphasé afin de charger la batterie et comportant un convertisseur AC-DC isolé comprenant ledit circuit correcteur de facteur de puissance et un convertisseur DC-DC, ledit circuit correcteur de facteur de puissance étant un redresseur triphasé de Vienne comportant trois bras de commutation aptes à être connectés chacun à l'une des phases respectives du réseau d'alimentation triphasé par l'intermédiaire d'une bobine d'inductance en série, ledit dispositif de commande comprenant des moyens de traitement agencés pour exécuter les étapes du procédé tel que décrit ci-dessus. Ces moyens de traitement peuvent par exemple comprendre un processeur, par exemple un microprocesseur, un microcontrôleur, ou autre.

L'invention concerne encore un véhicule automobile électrique ou hybride comprenant une batterie haute tension et un dispositif de charge embarqué apte à charger la batterie à partir d'un réseau d'alimentation électrique triphasé, ledit dispositif de charge comportant un convertisseur AC-DC isolé comprenant un circuit correcteur de facteur de puissance et un convertisseur DC-DC, ledit circuit correcteur de facteur de puissance étant un redresseur triphasé de Vienne comportant trois bras de commutation aptes à être connectés chacun à l'une des phases respectives du réseau d'alimentation triphasé par l'intermédiaire d'une bobine d'inductance en série, ledit véhicule comprenant un dispositif de commande tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux figures suivantes dans lesquelles :

- la figure 1 illustre de façon schématique une topologie connue d'un dispositif de charge de batterie destiné à être embarqué sur un véhicule automobile électrique ou hybride,
- la figure 2 illustre de façon schématique la structure d'un redresseur triphasé de Vienne intégré au dispositif de charge de la figure 1, sans le filtre d'entrée,

- la figure 3 est un schéma illustrant l'évolution des tensions de phase $V_1$, $V_2$ $V_3$ en entrée du redresseur sur une période du courant réseau et le principe de séparation de la période du courant réseau en six portions de période pour l'application des rapports cycliques de hachage ;

- la figure 4 est un schéma illustrant sur une période du courant réseau, les bras qui seront successivement maintenus à l'état fermé (rapport cyclique appliqué égal à 100%) ;

- La figure 5 reprend le schéma de la figure 2 en indiquant la configuration d'application des rapports cycliques de hachage en début de la première portion de période déterminée de manière à respecter les courants de consigne voulus par la régulation tout en réduisant les pertes par commutation ;

- la figure 6 correspond au schéma de la figure 5, en indiquant cette fois la configuration d'application des rapports cycliques de hachage en fin de la première portion de période.

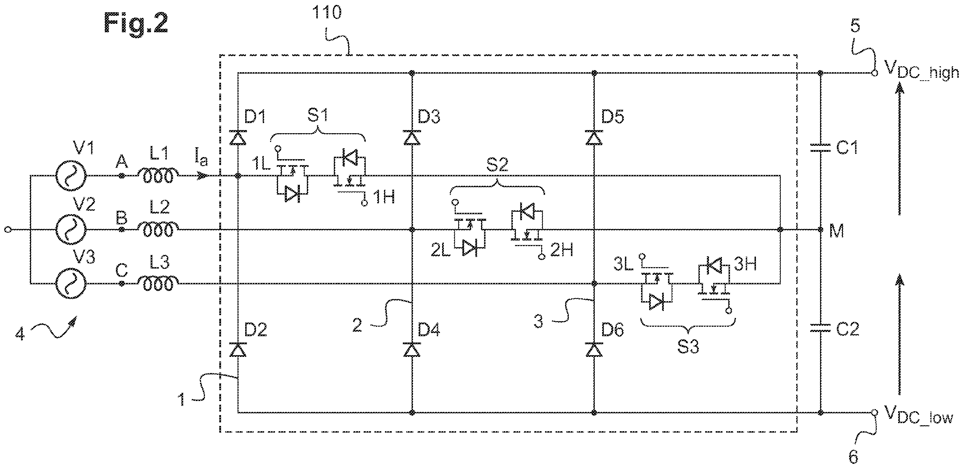

La figure 2 rappelle donc la structure du redresseur triphasé de Vienne utilisé ici pour la correction du facteur de puissance du dispositif de charge. Le redresseur triphasé de Vienne 110 comprend trois connexions entrantes parallèles couplées chacune à une phase A, B, C d'un réseau d'alimentation électrique 4 triphasé par l'intermédiaire d'une bobine d'inductance en série L1, L2, L3, et reliée chacune à une paire d'interrupteurs S1, S2, S3 formant un premier, un deuxième et un troisième bras de commutation du redresseur triphasé de Vienne.

Chaque paire d'interrupteurs S1, S2, S3 comprend un montage série constitué d'un premier interrupteur correspondant 1H, 2H, 3H, qui est piloté quand un courant d'entrée correspondant Ia, Ib, Ic est positif, et d'un second interrupteur correspondant 1L, 2L, 3L qui est piloté quand le courant d'entrée correspondant est négatif. Autrement dit, on utilise un seul interrupteur piloté sur une branche de commutation pour le hachage du courant. Les interrupteurs sont formés par des composants semi-conducteurs commandés à la fermeture et à l'ouverture, tel que par exemple des transistors MOS (acronyme anglais pour « Metal Oxide Semiconductor »), connectés en antiparallèle avec une diode. Les interrupteurs 1H à 3H sont également nommés interrupteurs haut et les interrupteurs 1L à 3L, interrupteurs bas.

Le redresseur triphasé de Vienne comprend aussi trois branches parallèles 1, 2 et 3, comportant chacune deux diodes D1 et D2, D3 et D4 et D5 et D6, qui forment un pont triphasé à six diodes permettant de redresser le courant et la tension prélevés à partir d'un réseau d'alimentation électrique 4 triphasé. Chaque entrée du redresseur triphasé de Vienne est connectée, par une connexion entrante parallèle respective, à un point de connexion situé entre deux diodes d'une même branche 1, 2 et 3.

Les deux extrémités communes des branches 1, 2 et 3 constituent deux bornes de sorties 5 et 6, respectivement positive et négative, du redresseur triphasé de Vienne, qui sont destinées à être couplées au dispositif DC-DC.

Les bras de commutation S1, S2, S3 de chaque phase sont par ailleurs connectés chacun respectivement entre le point de connexion situé entre les deux diodes des première, deuxième et troisième branches 1, 2 et 3 et un point milieu M des tensions de sortie VDC_high et VDC_low du redresseur triphasé de Vienne, correspondant respectivement à la tension sur un condensateur de sortie C1 entre la borne de sortie positive 5 du redresseur triphasé et le point milieu M et à la tension sur un condensateur de sortie C2 entre le point milieu M et une borne de sortie négative 6 du redresseur triphasé.

A noter que la tension sur les condensateurs de sortie C1, C2 est asservie de façon indépendante par le convertisseur DC-DC du dispositif de charge connecté en sortie du redresseur triphasé de Vienne, selon la topologie globale illustré à la figure 1. Autrement dit, les tensions de sortie du redresseur triphasé de Vienne sont commandées par le convertisseur DC-DC.

Le redresseur triphasé de Vienne intercalé à l'entrée de l'alimentation du chargeur assume le rôle de correction du facteur de puissance du chargeur, soit de régulateur des courants réseau. Un tel rôle permet d'empêcher les courants perturbateurs (harmoniques) produits par le chargeur, de circuler à travers l'impédance du réseau, située en amont du redresseur de Vienne.

Les bras de commutation S1, S2 et S3 de chaque phase sont contrôlés aux moyens de trois signaux de commande PWM (d'après l'anglais « Pulse Width Modulation ») ayant un rapport cyclique variable individuellement réglé par des moyens de traitement de type microcontrôleur par exemple (non représenté). Ainsi, les moyens de traitement sont adaptés à déterminer les rapports cycliques des signaux de commande de commutation des interrupteurs des bras de commutation du redresseur, nécessaires pour l'asservissement des courants sinusoïdaux en entrée du redresseur. A noter qu'à chaque instant, on a seulement un interrupteur par bras de commutation qui a une influence sur les tensions entre-phases, l'autre interrupteur étant court-circuité par la diode montée en parallèle.

Soient $V_1$, $V_2$ et $V_3$ les tensions simples, entre phases et neutre, en entrée du redresseur triphasé de Vienne et L la valeur des inductances L1, L2 et L3 connectées en série respectivement entre les points A, B et C et les bras de commutation du redresseur.

Le calcul des rapports cycliques nécessaires à la génération des tensions à réaliser entre chaque bras repose tout d'abord sur le principe de maintenir à l'état fermé (soit d'appliquer un rapport cyclique égal à 100%) le bras de commutation dont le courant sera susceptible d'être le prochain à changer de signe, de façon à ne pas subir les erreurs de mesure autour du changement de signe d'un des courants. Ce principe permet en effet d'immuniser la commande du système aux erreurs de mesure sur le courant du bras de commutation concerné puisqu'en maintenant fermé en permanence ce bras autour du changement de signe, il n'y aura pas de passage d'un interrupteur à l'autre au changement de signe. En outre, dans la mesure où seuls deux bras de commutation sur trois sont commutés pour le hachage des courants d'entrée dans le redresseur dans cette configuration où le rapport cyclique du PWM de hachage est maintenu à 100% pour le bras dont le courant va changer de signe, les pertes par commutation peuvent être réduites.

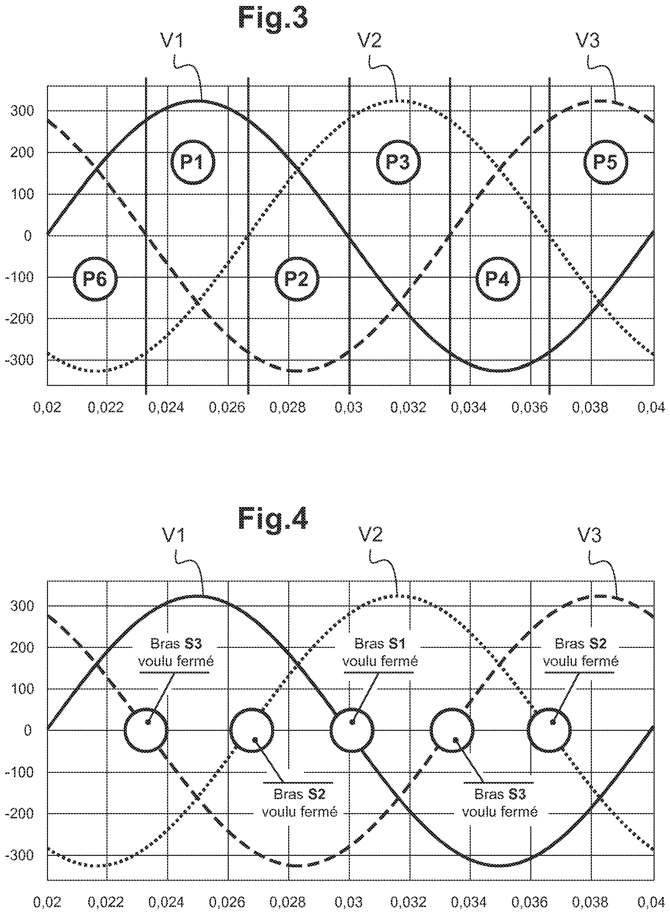

Pour cela, la période du courant réseau triphasé est divisée en six portions de périodes, comme le montre la figure 3, illustrant l'évolution des courants de consigne représentés par les tensions de phase $V_1$, $V_2$ $V_3$ sur une période du courant réseau. Comme on cherche à avoir un facteur de puissance le plus proche de 1, les tensions de phase sur chaque bras vont être en phase avec les courants. Les portions de période référencées P1 à P6 sur la figure 3 sont aisément identifiables à partir des courants de consigne. Par exemple, la portion de période P1 correspond à un courant de consigne positif sur le premier bras de commutation 1 et à des courants de consigne négatifs sur les deuxième et troisième bras de commutation S2 et S3.

Une fois ces portions de période du courant réseau définies, on analyse l'évolution des courants de consigne dans les portions de période, de façon à identifier sur chaque portion de période successivement, le bras de commutation dont le courant est susceptible d'être le prochain à changer de signe, et on fixe sur le bras identifié un signal de commande PWM ayant un rapport cyclique égal à 100% lors du changement de signe du courant, de sorte que les interrupteurs haut et bas du bras identifié sont maintenus fermés en permanence autour du changement de signe du courant. On va donc en permanence chercher à fixer un rapport cyclique de commande égal à 100% sur le bras dont la tension est intermédiaire, c'est-à-dire comprise entre la tension la plus grande des trois phases et la tension la plus faible des trois phases, autrement dit encore, qui est susceptible d'être la prochaine à passer par zéro.

La figure 4 illustre sur une période du courant réseau triphasé, les bras qui seront successivement maintenus à l'état fermé (rapport cyclique appliqué égal à 100%), tandis que les deux autres seront utilisés pour le hachage. Pour l'analyse, plaçons-nous par exemple au début de la première portion de période P1, où la tension intermédiaire $V_3$ est celle reçue sur le troisième bras de commutation S3, de sorte que dans la première partie de cette portion de période, le bras de commutation S3 associé à la tension de phase $V_3$ est maintenu à l'état fermé.

Soient par exemple les tensions entre phases $V_{12}$ et $V_{13}$ demandées par la régulation en entrée du redresseur. Avec le bras de commutation S3 maintenu à l'état fermé en permanence dans la première partie de la portion de période référencée 1, il est possible de commander les tensions entre phases $V_{12}$ et $V_{13}$ suivantes en fonction de l'état de fermeture des interrupteurs sur les autres bras de commutation :

| Tension | $V_{12}$ | | | $V_{13}$ | | |
|---|---|---|---|---|---|---|
| Bras fermé | 0 | $V_{dc}$ | $2\,V_{dc}$ | 0 | $V_{dc}$ | $2\,V_{dc}$ |
| S3 | | | x | | x | |
| S2 et S3 | | x | | | x | |
| S1 et S3 | | x | | x | | |
| S1, S2 et S3 | x | | | x | | |

Le tableau précédent montre qu'en maintenant le bras de commutation S3 fermé en permanence, il est possible de générer une tension entre phases $V_{12}$ comprise entre 0 et $2V_{dc}$ et une tension entre phases $V_{13}$ comprise entre 0 et $V_{dc}$, en respectant $V_{12} > V_{13}$. Dans la première partie de la portion de période référencée 1, on sera nécessairement dans ce cas car la tension maximale est sur le premier bras de commutation S1 et la tension minimale est sur le deuxième bras de commutation S2 (le bras S3 étant associé à la tension intermédiaire comme dit plus haut). Tant que le bras S3 est celui de la tension intermédiaire et que $V_{13} < V_{dc}$, on pourra maintenir le bras S3 fermé en permanence.

En complément de ce premier principe pour la détermination des rapports cycliques de manière à respecter les tensions entre phases désirées, un second principe est mis en œuvre permettant d'utiliser sans problème de continuité et de façon efficace les interrupteurs haut et bas des bras de commutation utilisés pour le hachage. Selon ce principe, si le rapport cyclique de commande est défini égal à 100%, on ferme les interrupteurs haut et bas à 100%, sinon on ferme l'interrupteur haut selon le rapport cyclique défini si le courant de consigne sur le bras en question est positif (en gardant l'interrupteur bas ouvert) et on ferme l'interrupteur bas si le courant de consigne est négatif (en gardant l'interrupteur haut ouvert). Dans la mesure où on commande un rapport cyclique égal à 100% autour du changement de signe de courant pour le bras dont le courant est susceptible d'être le prochain à changer de signe, on évite les erreurs dues à une mauvaise mesure du courant dans le bras de commutation en question.

Afin de limiter les ondulations de courant dues au hachage, on va maintenant chercher à répartir les fermetures d'interrupteurs de manière à faire osciller la tension le moins possible. Autrement dit, si on souhaite une valeur cible de

tension entre phases $V_{12}$ comprise entre $V_{dc}$ et $2V_{dc}$, alors on ne va utiliser que des combinaisons de fermeture d'interrupteurs susceptibles de réaliser ces deux niveaux de tension, soient les combinaisons de fermeture d'interrupteurs décrites aux trois premières lignes du tableau précédent. De la même façon, si on souhaite réaliser une tension cible $V_{12}$ comprise entre 0 et $V_{dc}$, on ne va utiliser que des combinaisons de fermeture d'interrupteurs susceptibles de réaliser ces deux niveaux de tension, soient les combinaisons de fermeture d'interrupteurs décrites aux trois dernières lignes du tableau précédent.

Si l'on se réfère par exemple au début de la première portion de période des courants de consigne, en nominal on devrait avoir la tension entre phases $V_{12}$ comprise entre $V_{dc}$ et $2V_{dc}$ et la tension entre phases $V_{13}$ comprise entre 0 et $V_{dc}$. Pour atteindre ces niveaux de tension, étant au début de la première portion de période, le troisième bras de commutation S3 étant maintenu fermé en permanence, on utilise donc les premier et deuxième bras de commutation S1 et S2 pour le hachage. On définit alors les rapports variables intermédiaires suivants : $\alpha_{12}^{2} = \dfrac{V_{12} - V_{dc}}{V_{dc}}$, compris entre 0 et 1 tant que $V_{12}$ est compris entre $V_{dc}$ et $2V_{dc}$. $\alpha_{13}^{1} = \dfrac{V_{13}}{V_{dc}}$, compris entre 0 et 1 tant que $V_{13}$ est compris entre 0 et $V_{dc}$.

Ces rapports variables intermédiaires définissent le pourcentage de temps du cycle de hachage où la combinaison de fermeture d'interrupteurs décrites aux trois premières lignes du tableau précédent, permettant de réaliser les niveaux de tension nécessaires à la réalisation des tensions cibles souhaitées $V_{12}$ et $V_{13}$ sur la première portion de période, est active.

Autrement dit, pour réaliser les tensions cibles voulues, soient une valeur de $V_{12}$ comprise entre $V_{dc}$ et $2V_{dc}$ et une valeur de $V_{13}$ comprise entre 0 et $V_{dc}$, on dispose de trois combinaisons de fermeture correspondant respectivement à des configurations de commande où on a le troisième bras S3 fermé, les deuxième et troisième bras S2 et S3 fermés et les premier et troisième bras S1 et S3 fermés. Les rapports variables intermédiaires définis plus haut vont permettre de répartir les temps de fermeture des interrupteurs des bras concernés suivant ces configurations de commande.

Pour réaliser les tensions cibles voulue au début de la première portion de période, on va alors fermer uniquement le troisième bras de commutation S3 pendant un pourcentage de temps correspondant à $\alpha_{12}^{2}$, fermer les premier et troisième bras S1 et S3 pendant un temps de fermeture correspondant à $1 - \alpha_{13}^{1}$ et fermer les deuxième et troisième bras S2 et S3 pendant le reste du temps. Selon les principes précédents, on applique donc les rapports cycliques suivants pour chaque interrupteur sur chaque bras de commutation :

Pour le premier bras S1, l'interrupteur haut est commandé avec un rapport cyclique égal à $1 - \alpha_{13}^{1}$ tandis que l'interrupteur bas est commandé à l'état ouvert ;

Pour le deuxième bras S2, l'interrupteur bas est commandé avec un rapport cyclique égal à $\alpha_{13}^{1} - \alpha_{12}^{2}$, tandis que l'interrupteur haut est commandé à l'état ouvert ;

Pour le troisième bras S3, les interrupteurs haut et bas sont maintenus en permanence à l'état fermé.

Ainsi, en prenant le cas de la première portion de période, en début de cette première portion, il s'avère que seuls deux interrupteurs sur les six vont être commutés pour réguler les courants en entrée du redresseur, à savoir l'interrupteur haut du premier bras et l'interrupteur bas du deuxième bras, de sorte que les pertes par commutation se trouvent réduites.

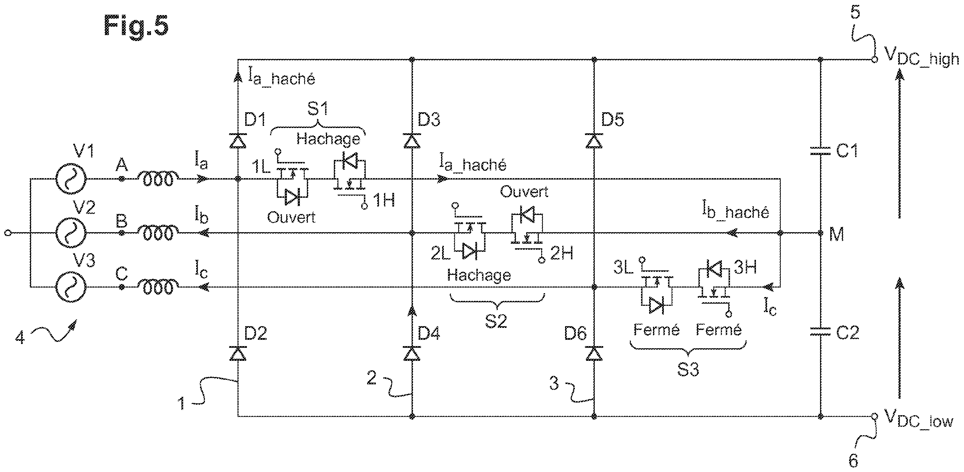

La figure 5 illustre cette configuration d'application des rapports cycliques de hachage en début de la première portion de période P1, où le troisième bras de commutation S3 est fermé en permanence du fait du changement de signe du courant de phase Ic associé au bras de commutation S3, tandis que seuls l'interrupteur haut 1H du premier bras de commutation S1 et l'interrupteur bas 2L du deuxième bras de commutation S2 commutent pour le hachage des courants de phase la et Ib. A noter que le courant de phase Ic dans la phase C sera bien régulé car les trois phases sont équilibrées, de sorte qu'on a la+Ib+Ic=0.

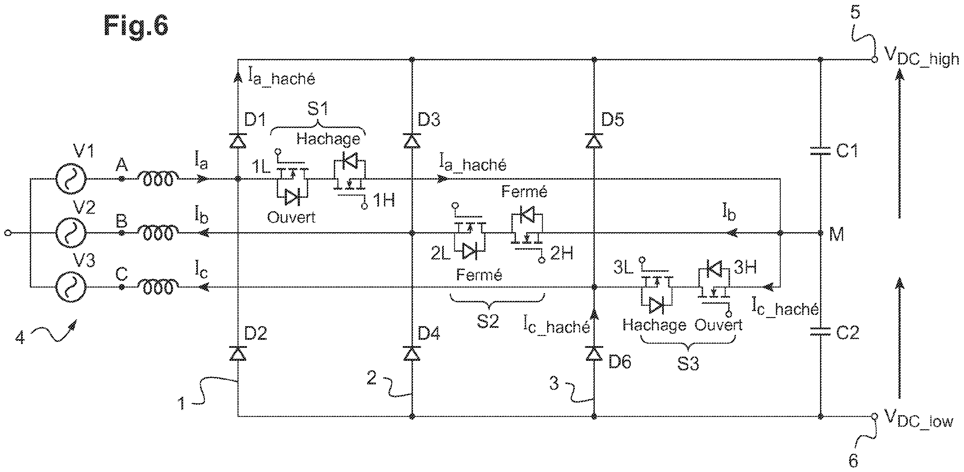

Alors qu'en fin de la première portion de période P1, comme l'illustre la figure 6, la configuration d'application des rapports cycliques est la suivante. On aura le deuxième bras de commutation S2 fermé en permanence pour préparer le changement de signe à venir du courant Ib, tandis que seuls l'interrupteur haut 1H du premier bras de commutation S1 et l'interrupteur bas 3L du troisième bras de commutation S3 commutent pour le hachage des courants de phase la et Ic. A noter que le courant de phase Ib dans la phase B sera bien régulé car les trois phases sont équilibrées, de sorte qu'on a Ia+Ib+Ic=0.

On va maintenant décrire un second exemple de réalisation des tensions cibles entre phases $V_{12}$ et $V_{13}$, en se plaçant au milieu de la première portion de période P1, où on souhaite une valeur de tension comprise entre $V_{dc}$ et $2\,V_{dc}$ pour les 2 tensions en question $V_{12}$ et $V_{13}$. A noter qu'il s'agit de la seule configuration où il va être impossible de maintenir un bras fermé en permanence. Aussi, pour atteindre ces niveaux de tension, il va falloir utiliser de nouvelles configurations de commande. Etant placé au milieu de la première portion de période P1, le bras 3, maintenu fermé en permanence en début de la première portion de période P1 va être utilisé pour le hachage. Comme on s'approche de la deuxième portion de période P2 où le deuxième bras de commutation S2 devra être maintenu fermé en permanence autour du changement de signe du courant dans la mesure où il s'agit du bras dont le courant sera le prochain à changer de signe, on va également utiliser ce bras pour le hachage. Par ailleurs, dans la mesure où tous les bras devront être ouverts à un moment pour réaliser les tensions souhaitées, il sera alors judicieux de ne jamais fermer le premier bras S1 pour éviter les pertes par commutations sur ce bras. Nous disposons alors des configurations de commande suivantes pour réaliser les tensions $V_{12}$ et $V_{13}$ :

| Tension | $V_{12}$ | | | $V_{13}$ | | |
|---|---|---|---|---|---|---|
| Bras fermé | 0 | Vdc | 2 Vdc | 0 | Vdc | 2 Vdc |
| S3 | | | x | | x | |
| S2 | | x | | | | x |
| S2 et S3 | | x | | | x | |
| Aucun | | | x | | | x |

On définit alors le nouveau rapport variable intermédiaire :

$$\alpha_{13}^2 = \frac{V_{13} - V_{dc}}{V_{dc}}$$

Si $\alpha_{12}^2 > \alpha_{13}^2$, alors on va commander à l'état ouvert tous les bras pendant un pourcentage de temps correspondant à $\alpha_{13}^2$, fermer les bras S2 et S3 pendant un pourcentage de temps correspondant $1 - \alpha_{12}^2$ et fermer uniquement le troisième bras S3 pendant le reste du temps.

Si $\alpha_{12}^2 < \alpha_{13}^2$, alors on va commander à l'état ouvert tous les bras pendant un pourcentage de temps correspondant à $\alpha_{12}^2$, fermer les bras S2 et S3 pendant un pourcentage de temps correspondant $1 - \alpha_{13}^2$ et fermer uniquement le deuxième bras S2 pendant le reste du temps.

Selon les principes précédents, on applique donc les rapports cycliques suivants pour chaque interrupteur sur chaque bras de commutation :

Pour le premier bras S1, les interrupteurs haut et bas sont commandés à l'état ouvert ;

Pour le deuxième bras S2, l'interrupteur bas est commandé avec un rapport cyclique égal à $1 - \alpha_{12}^2$, tandis que l'interrupteur haut est commandé à l'état ouvert ;

Pour le troisième bras S3, l'interrupteur haut est commandé à l'état fermé et l'interrupteur bas est commandé avec un rapport cyclique égal à $1 - \alpha_{13}^2$.

Comme dans le cas précédent décrit correspondant au début de la première portion de période, on ne fait commuter que deux interrupteurs sur les six présents dans les bras de commutation du redresseur.

Cette stratégie mise en œuvre pour l'application des rapports cycliques, permettant notamment l'amélioration des pertes par commutation, est particulièrement adaptée dans un contexte de faible puissance requise, où les pertes par commutation ont plus d'effet sur le rendement.

**Revendications**

1. Procédé de commande d'un circuit correcteur de facteur de puissance (11) pour un dispositif de charge (10) de batterie (20) embarqué dans un véhicule automobile électrique ou hybride, ledit dispositif de charge étant apte à être connecté à un réseau d'alimentation électrique triphasé (4) afin de charger la batterie et comportant un convertisseur AC-DC isolé comprenant ledit circuit correcteur de facteur de puissance (11) et un convertisseur DC-DC (12), ledit circuit correcteur de facteur de puissance (11) étant un redresseur triphasé de Vienne comprenant trois bras de commutation (S1, S2, S3) aptes à être connectés chacun à l'une des phases respectives (A, B, C) du réseau d'alimentation triphasé (4) par l'intermédiaire d'une bobine d'inductance en série (L1, L2, L3) et comprenant chacun un montage en série d'un interrupteur haut apte à être piloté quand le courant du réseau est positif et d'un interrupteur bas apte à être piloté quand le courant du réseau est négatif, chaque bras étant piloté à l'aide de signaux de commande de modulation par largeur d'impulsion dont le rapport cyclique de commutation est déterminé en fonction de valeurs de courants de consigne en entrée du redresseur, **caractérisé en ce que**, sur chaque période des courants de consigne, les signaux de commande sont déterminés de façon à ne faire commuter systématiquement que deux bras sur trois en fonction d'un changement de signe des courants de consigne et, parmi les deux bras qui commutent, on procède à une répartition de l'état de commutation des interrupteurs concernés en faisant varier les rapports cycliques en fonction des valeurs des tensions entre phases à chaque instant donné.

2. Procédé selon la revendication 1, **caractérisé en ce qu'**on divise la période des courants de consigne en des portions de périodes, on analyse l'évolution des courants de consigne dans les portions de période, de façon à identifier sur chaque portion de période successivement, le bras de commutation dont la tension est intermédiaire entre une tension de phase la plus haute et une tension de phase la plus faible, et on applique sur le bras identifié un signal de commande ayant un rapport cyclique fixé à 100% lors du changement de signe du courant, de sorte que les interrupteurs du bras identifié sont maintenus fermés en permanence autour du changement de signe du courant de la tension intermédiaire.

3. Procédé selon la revendication 2, **caractérisé en ce que** pour chaque portion de période des courants de consigne :

   on commande la fermeture des interrupteurs haut et bas de la tension intermédiaire tant que le rapport cyclique appliqué sur le bras identifié est fixé à 100%,
   pour un courant de consigne sur un des deux bras qui commute positif, on commande le hachage de l'interrupteur haut du bras correspondant avec un premier rapport cyclique et on ouvre l'interrupteur bas du bras correspondant, et
   pour un courant de consigne sur un des deux bras qui commute négatif, on commande le hachage de l'interrupteur bas avec un deuxième rapport cyclique et on ouvre l'interrupteur haut.

4. Procédé selon l'une des revendications 2 ou 3, **caractérisé en ce que** chaque portion de période représente un sixième d'une période complète des courants de consigne.

5. Dispositif de commande d'un circuit correcteur de facteur de puissance (11) pour un dispositif de charge (10) de batterie (20) embarqué dans un véhicule automobile électrique ou hybride, ledit dispositif de charge étant apte à être connecté à un réseau d'alimentation électrique triphasé (4) afin de charger la batterie et comportant un convertisseur AC-DC isolé comprenant ledit circuit correcteur de facteur de puissance (11) et un convertisseur DC-DC (12), ledit circuit correcteur de facteur de puissance (11) étant un redresseur triphasé de Vienne (110) comportant trois bras de commutation (S1, S2, S3) aptes à être connectés chacun à l'une des phases respectives (A, B, C) du réseau d'alimentation triphasé (4) par l'intermédiaire d'une bobine d'inductance en série (L1, L2, L3), ledit dispositif de commande comprenant des moyens de traitement agencés pour exécuter les étapes du procédé selon l'une quelconque des revendications 1 à 4.

6. Véhicule automobile électrique ou hybride comprenant une batterie haute tension et un dispositif de charge embarqué apte à charger la batterie à partir d'un réseau d'alimentation électrique triphasé, ledit dispositif de charge comportant un convertisseur AC-DC isolé comprenant un circuit correcteur de facteur de puissance (11) et un convertisseur DC-DC (12), ledit circuit correcteur de facteur de puissance (11) étant un redresseur triphasé de Vienne comportant trois bras de commutation (S1, S2, S3) aptes à être connectés chacun à l'une des phases respectives (A, B, C) du réseau d'alimentation triphasé (4) par l'intermédiaire d'une bobine d'inductance en série (L1, L2, L3), ledit véhicule comprenant un dispositif de commande selon la revendication 5.

**EP 3 539 203 B1**

**Patentansprüche**

1. Verfahren zur Steuerung einer Leistungsfaktor-Korrekturschaltung (11) für eine Ladevorrichtung (10) einer Batterie (20) an Bord eines Elektro- oder Hybridfahrzeugs, wobei die Ladevorrichtung mit einem dreiphasigen Stromversorgungsnetz (4) verbunden werden kann, um die Batterie zu laden, und einen isolierten AC/DC-Wandler aufweist, der die Leistungsfaktor-Korrekturschaltung (11) und einen DC/DC-Wandler (12) enthält, wobei die Leistungsfaktor-Korrekturschaltung (11) ein dreiphasiger Vienna-Gleichrichter ist, der drei Schaltarme (S1, S2, S3) enthält, die je mit einer der Phasen (A, B, C) des dreiphasigen Versorgungsnetzes (4) über eine in Reihe geschaltete Drosselspule (L1, L2, L3) verbunden werden können und je eine Reihenschaltung eines oberen Unterbrechers, der gesteuert werden kann, wenn der Strom des Netzes positiv ist, und eines unteren Unterbrechers enthalten, der gesteuert werden kann, wenn der Strom des Netzes negativ ist, wobei jeder Arm mit Hilfe von Steuersignalen einer Impulsbreitenmodulation gesteuert wird, deren Schalt-Tastverhältnis abhängig von Sollstromwerten am Eingang des Gleichrichters bestimmt wird, **dadurch gekennzeichnet, dass** in jeder Periode der Sollströme die Steuersignale so bestimmt werden, dass systematisch nur zwei von drei Armen abhängig von einem Vorzeichenwechsel der Sollströme geschaltet werden, und unter den zwei schaltenden Armen eine Verteilung des Schaltzustands der betroffenen Unterbrecher durchgeführt wird, indem die Tastverhältnisse abhängig von den Werten der Spannungen zwischen Phasen in jedem gegebenen Moment variiert werden.

2. Verfahren nach Anspruch 1, **dadurch gekennzeichnet, dass** die Periode der Sollströme in Periodenabschnitte aufgeteilt wird, die Entwicklung der Sollströme in den Periodenabschnitten analysiert wird, um in jedem Periodenabschnitt nacheinander den Schaltarm zu erkennen, dessen Spannung zwischen einer höchsten Phasenspannung und einer niedrigsten Phasenspannung liegt, und an den erkannten Arm ein Steuersignal angelegt wird, das beim Vorzeichenwechsel des Stroms ein auf 100% festgelegtes Tastverhältnis hat, so dass die Unterbrecher des erkannten Arms um den Vorzeichenwechsel des Stroms der Zwischenspannung herum permanent geschlossen gehalten werden.

3. Verfahren nach Anspruch 2, **dadurch gekennzeichnet, dass** für jeden Periodenabschnitt der Sollströme:

   das Schließen der oberen und unteren Unterbrecher der Zwischenspannung gesteuert wird, so lange das an den erkannten Arm angewendete Tastverhältnis auf 100% festgelegt ist,
   für einen Sollstrom auf einem der zwei Arme, der positiv schaltet, das Zerhacken des oberen Unterbrechers des entsprechenden Arms mit einem ersten Tastverhältnis gesteuert und der untere Unterbrecher des entsprechenden Arms geöffnet wird, und
   für einen Sollstrom auf einem der zwei Arme, der negativ schaltet, das Zerhacken des unteren Unterbrechers mit einem zweiten Tastverhältnis gesteuert und der obere Unterbrecher geöffnet wird.

4. Verfahren nach einem der Ansprüche 2 oder 3, **dadurch gekennzeichnet, dass** jeder Periodenabschnitt ein Sechstel einer vollständigen Periode der Sollströme darstellt.

5. Steuervorrichtung einer Leistungsfaktor-Korrekturschaltung (11) für eine Ladevorrichtung (10) einer Batterie (20) an Bord eines Elektro- oder Hybridfahrzeugs, wobei die Ladevorrichtung mit einem dreiphasigen Stromversorgungsnetz (4) verbunden werden kann, um die Batterie zu laden, und einen isolierten AC/DC-Wandler aufweist, der die Leistungsfaktor-Korrekturschaltung (11) und einen DC/DC-Wandler (12) enthält, wobei die Leistungsfaktor-Korrekturschaltung (11) ein dreiphasiger Vienna-Gleichrichter (110) ist, der drei Schaltarme (S1, S2, S3) aufweist, die je mit einer der Phasen (A, B, C) des dreiphasigen Versorgungsnetzes (4) über eine in Reihe geschaltete Drosselspule (L1, L2, L3) verbunden werden können, wobei die Steuervorrichtung Verarbeitungseinrichtungen enthält, die eingerichtet sind, um die Schritte des Verfahrens nach einem der Ansprüche 1 bis 4 auszuführen.

6. Elektro- oder Hybridkraftfahrzeug, das eine Hochspannungsbatterie und eine an Bord befindliche Ladevorrichtung enthält, die die Batterie ausgehend von einem dreiphasigen Stromversorgungsnetz laden kann, wobei die Ladevorrichtung einen isolierten AC/DC-Wandler aufweist, der eine Leistungsfaktor-Korrekturschaltung (11) und einen DC/DC-Wandler (12) enthält, wobei die Leistungsfaktor-Korrekturschaltung (11) ein dreiphasiger Vienna-Gleichrichter ist, der drei Schaltarme (S1, S2, S3) aufweist, die je mit einer der Phasen (A, B, C) des dreiphasigen Versorgungsnetzes (4) über eine in Reihe geschaltete Drosselspule (L1, L2, L3) verbunden werden können, wobei das Fahrzeug eine Steuervorrichtung nach Anspruch 5 enthält.

**Claims**

1. Method for controlling a power factor correction circuit (11) for a battery (20) charging device (10) on board an electric or hybrid motor vehicle, said charging device being capable of being connected to a three-phase electrical power supply network (4) in order to charge the battery and including an isolated AC-to-DC converter comprising said power factor correction circuit (11) and a DC-to-DC converter (12), said power factor correction circuit (11) being a three-phase Vienna rectifier comprising three switching arms (S1, S2, S3), each being capable of being connected to one of the respective phases (A, B, C) of the three-phase power supply network (4) via a series inductor (L1, L2, L3) and each comprising a series assembly of a high switch capable of being driven when the current of the network is positive and of a low switch capable of being driven when the current of the network is negative, each arm being driven using pulse width modulation control signals, the switching duty cycle of which is determined according to setpoint current values at the input of the rectifier, **characterized in that**, over each period of the setpoint currents, the control signals are determined so as to systematically switch only two arms out of three according to a change in sign of the setpoint currents and, of the two arms that switch, the switching state of the switches in question is distributed by varying the duty cycles according to the values of the voltages between phases at each given instant in time.

2. Method according to Claim 1, **characterized in that** the period of the setpoint currents is divided into period portions, the variation of the setpoint currents in the period portions is analysed in order to identify, in each period portion successively, the switching arm whose voltage is intermediate between a highest phase voltage and a lowest phase voltage, and a control signal having a duty cycle fixed at 100% is applied to the identified arm during the change in sign of the current, such that the switches of the identified arm are kept permanently closed around the change in sign of the current of the intermediate voltage.

3. Method according to Claim 2, **characterized in that**, for each period portion of the setpoint currents:

   the closure of the high acomnd low switches of the intermediate voltage is controlled while the duty cycle applied to the identified arm is fixed at 100%;
   for a positive setpoint current on one of the two arms that is switching, the chopping of the high switch of the corresponding arm is controlled with a first duty cycle and the low switch of the corresponding arm is opened; and
   for a negative setpoint current on one of the two arms that is switching, the chopping of the low switch is controlled with a second duty cycle and the high switch is opened.

4. Method according to either of Claims 2 and 3, **characterized in that** each period portion represents a sixth of a complete period of the setpoint currents.

5. Device for controlling a power factor correction circuit (11) for a battery (20) charging device (10) on board an electric or hybrid motor vehicle, said charging device being capable of being connected to a three-phase electrical power supply network (4) in order to charge the battery and including an isolated AC-to-DC converter comprising said power factor correction circuit (11) and a DC-to-DC converter (12), said power factor correction circuit (11) being a three-phase Vienna rectifier (110) including three switching arms (S1, S2, S3), each being capable of being connected to one of the respective phases (A, B, C) of the three-phase power supply network (4) via a series inductor (L1, L2, L3), said control device comprising processing means arranged to carry out the steps of the method according to any one of Claims 1 to 4.

6. Electric or hybrid motor vehicle comprising a high-voltage battery and an onboard charging device capable of charging the battery from a three-phase electrical power supply network, said charging device including an isolated AC-to-DC converter comprising a power factor correction circuit (11) and a DC-to-DC converter (12), said power factor correction circuit (11) being a three-phase Vienna rectifier including three switching arms (S1, S2, S3), each being capable of being connected to one of the respective phases (A, B, C) of the three-phase power supply network (4) via a series inductor (L1, L2, L3), said vehicle comprising a control device according to Claim 5.

Fig.1

Fig.2

EP 3 539 203 B1

# Fig.3

# Fig.4

Fig.5

EP 3 539 203 B1

Fig.6

EP 3 539 203 B1

15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104811061

**Littérature non-brevet citée dans la description**

- THREE-PHASE UNITE POWER FACTOR AC/DC CONVERTER (PFC) WITH DUAL ISOLATED DC/DC CONVERTER FOR A BATTERY CHARGER. **HERMINJARD J ED.** 8TH EUROPEAN CONFERENCE ON POWER ELECTRONICS AND APPLICATIONS. LAUSANNE, CH, SEPT. 7 - 9, 1999; [EPE. EUROPEAN CONFERENCE ON POWER ELECTRONICS AND APPLICATIONS. EPE ASSOCIATION, 07 Septembre 1999, vol. 8, 1-10